# EUROPEAN PATENT APPLICATION

(11) **EP 4 195 563 A1**
(43) Date of publication of application: **14.06.2023**
(21) Application number: 21853321.4
(22) Date of filing: 30.06.2021
(51) Int. Cl.: H04L 5/00, H04W 64/00

(54) **MEASUREMENT METHOD AND APPARATUS FOR POSITIONING, AND STORAGE MEDIUM**

(30) Priority: 05.08.2020 CN 202010777753
(71) Applicant: Datang Mobile Communications Equipment Co., Ltd., Beijing 100085 (CN)
(72) Inventor: LI, Hui, Beijing 100085 (CN); REN, Bin, Beijing 100085 (CN); DA, Ren, Beijing 100085 (CN)
(74) Representative: Studio Torta S.p.A.
(86) International application number: PCT/CN2021/103348
(87) International publication number: WO 2022/028153

(57) **Abstract**

The embodiments of the present disclosure provide a measurement method and apparatus for positioning, and a storage medium. Said method comprises: receiving resource configuration information and measurement constraint information transmitted by a positioning server, the measurement constraint information is used for indicating, for a target device, how to perform measurement by using a resource corresponding to the resource configuration information; and performing resource measurement on the basis of the resource configuration information and the measurement constraint information, and transmitting a measurement result to the positioning server. In the embodiments of the present disclosure, positioning measurement is constrained by adding the measurement constraint information, so that UE or a base station only measures a reference signal in a valid direction, reducing the measurement complexity of the UE and the base station, and further reducing a positioning delay.

## Description

### CROSS-REFERENCE TO RELATED APPLICATION

The present application claims priority to Chinese patent application No. 202010777753.9 filed on August 05, 2020, entitled "Measurement Method and Apparatus for Positioning, and Storage Medium", which is hereby incorporated by reference in its entirety.

### FIELD

The present application relates to the field of wireless communication, and in particular, to measurement methods and apparatuses for positioning, and a storage medium.

### BACKGROUND

New radio (NR) downlink positioning technologies include NR downlink time difference of arrival (DL-TDOA) and NR downlink angle of departure (DL-AoD). NR uplink positioning technologies include NR uplink time difference of arrival (UL-TDOA) and NR uplink angle of arrival (UL-AoA). NR uplink and downlink hybrid positioning technologies include NR multiple cell-round trip time (Multi-RTT). In NR, corresponding positioning measurement values are defined for each positioning technology. For the downlink positioning technology, user equipment (UE) measures a downlink positioning reference signal (DL PRS) to obtain a positioning measurement value and reports it. For the uplink positioning technology, a base station (gNB) measures an uplink sounding reference signal (UL SRS) to obtain a positioning measurement value and reports it.

In the above positioning technologies, time measurement values are reported in DL-TDOA, UL-TDOA, and Multi-RTT for positioning calculation, and angle measurement values are adopted in DL-AoD and UL-AoA for positioning calculation. In DL-AoD, a location management function (LMF) determines an AoD direction pointing to UE for performing positioning calculation by using reference signal received power (RSRP) reported by UE in combination with angle information of each PRS resource reported by the base station. In UL-AoA, information on angle of arrival measured by the base station is directly reported to LMF for positioning calculation.

For example, for downlink positioning, DL PRS measured by the UE is configured by the LMF to the UE through a lightweight presentation protocol (LPP) protocol. LPP signaling includes multiple transmission and reception points (TRPs) to be measured by the UE, PRS resource set transmitted by each TRP, and PRS resources included in each PRS resource set. The UE measures each configured PRS resource, determines positioning measurement value at each TRP, and reports it to the LMF. Since the LMF does not know the location of the UE, it is required to configure enough PRS resources covering all directions to ensure that the UE obtains a better positioning measurement value and reports it to the LMF for positioning calculation. In this case, the UE needs to measure a large number of PRS resources, which increases a complexity of UE measurement and also increases a positioning delay. Similarly, for measurement of uplink SRS, the base station also needs to measure a large amount of resources, which increases the positioning delay.

### SUMMARY

In view of the problems above, embodiments of the present application provide measurement methods and apparatuses for positioning, and a storage medium.

An embodiment of the present application provides a measurement method for positioning, including:
receiving resource configuration information and measurement constraint information transmitted by a location management function (LMF); where the measurement constraint information is used for indicating a target device how to measure a resource corresponding to the resource configuration information; and
measuring the resource based on the resource configuration information and the measurement constraint information, and transmitting a measurement result to the LMF.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
   indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set. In an embodiment, the indicating the base station not to measure an SRS resource in the second SRS resource set includes: indicating the base station to only measure an SRS resource in the first SRS resource set other than the second SRS resource set; or
   the indicating the base station to measure an SRS resource in the second SRS resource set includes: indicating the base station to only measure SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the method further includes:
transmitting first location information of the UE to the LMF to indicate a predicted location of the UE.

In an embodiment, the first location information includes angle information of an uplink signal and/or received power information of the uplink signal.

In an embodiment, the method further includes:
transmitting angle information corresponding to the SRS resource to the LMF, where the angle information includes a horizontal dimension angle and a vertical dimension angle; and/or
transmitting angle information corresponding to the PRS resource to the LMF, where the angle information includes a horizontal dimension angle and a vertical dimension angle.

An embodiment of the present application provides a measurement method for positioning, including:
transmitting resource configuration information and measurement constraint information to a target device; where the measurement constraint information is used for indicating the target device how to measure a resource corresponding to the resource configuration information; and
receiving measurement results transmitted by the target device for positioning a user equipment (UE), where the measurement results are obtained through measuring, by the target device, the resource based on the resource configuration information and the measurement constraint information.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes:
indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the method further includes:
receiving first location information of the UE, and determining a predicted location of the LTE based on the first location information;
receiving angle information of resources corresponding to the resource configuration information, where the angle information includes a horizontal dimension angle and a vertical dimension angle; and
determining the measurement constraint information based on the predicted location, location information of the base station, and the angle information.

In an embodiment, the first location information includes angle information of an uplink signal and/or received power information of the uplink signal.

An embodiment of the present application provides a target device, including a memory, a transceiver, and a processor;
the memory is configured to store a computer program; the transceiver is configured to transmitand receive data under a control of the processor; and the processor is configured to read the computer program in the memory and perform the following operations of:
receiving resource configuration information and measurement constraint information transmitted by a location management function (LMF); where the measurement constraint information is used for indicating a target device how to measure a resource corresponding to the resource configuration information; and
measuring the resource based on the resource configuration information and the measurement constraint information, and transmitting a measurement result to the LMF.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes:
indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the operations further include: transmitting first location information of the UE to the LMF to indicate a predicted location of the UE.

In an embodiment, the first location information includes angle information of an uplink signal and/or received power information of the uplink signal.

In an embodiment, the operations further include:
transmitting angle information corresponding to the SRS resource to the LMF, where the angle information includes a horizontal dimension angle and a vertical dimension angle; and/or
transmitting angle information corresponding to the PRS resource to the LMF, where the angle information includes a horizontal dimension angle and a vertical dimension angle.

An embodiment of the present application provides a location management function (LMF), including a memory, a transceiver, and a processor;
the memory is configured to store a computer program; the transceiver is configured to transmitand receive data under a control of the processor; and the processor is configured to read the computer program in the memory and perform the following operations of:
transmitting resource configuration information and measurement constraint information to a target device; where the measurement constraint information is used for indicating the target device how to measure a resource corresponding to the resource configuration information; and
receiving measurement results transmitted by the target device for positioning a user equipment (UE), where the measurement results are obtained through measuring, by the target device, the resource based on the resource configuration information and the measurement constraint information.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes:
indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the operations further include:
receiving first location information of the UE, and determining a predicted location of the LTE based on the first location information;
receiving angle information of resources corresponding to the resource configuration information, where the angle information includes a horizontal dimension angle and a vertical dimension angle; and
determining the measurement constraint information based on the predicted location, location information of the base station, and the angle information.

In an embodiment, the first location information includes angle information of an uplink signal and/or received power information of the uplink signal.

An embodiment of the present application provides a measurement apparatus for positioning, including:
a receiving module, configured to receive resource configuration information and measurement constraint information transmitted by a location management function (LMF); where the measurement constraint information is used for indicating a target device how to measure a resource corresponding to the resource configuration information; and
a reporting module, configured to measure the resource based on the resource configuration information and the measurement constraint information, and transmit measurement results to the LMF.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes:
indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes: indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the reporting module is further configured to:
transmit first location information of the UE to the LMF to indicate a predicted location of the UE.

In an embodiment, the first location information includes angle information of an uplink signal and/or received power information of the uplink signal.

In an embodiment, the reporting module is further configured to:
transmit angle information corresponding to the SRS resource to the LMF, where the angle information includes a horizontal dimension angle and a vertical dimension angle; and/or
transmit angle information corresponding to the PRS resource to the LMF, where the angle information includes a horizontal dimension angle and a vertical dimension angle.

An embodiment of the present application provides a measurement apparatus for positioning, including:
a transmitting module, configured to transmit resource configuration information and measurement constraint information to a target device; where the measurement constraint information is used for indicating the target device how to measure a resource corresponding to the resource configuration information; and
a processing module, configured to receive measurement results transmitted by the target device for positioning a user equipment (UE), where the measurement results are obtained through measuring, by the target device, the resource based on the resource configuration
information and the measurement constraint information.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating a base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes: indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the processing module is further configured to:
receive first location information of the UE, and determine a predicted location of the UE based on the first location information;
receive angle information of resources corresponding to the resource configuration information, where the angle information includes a horizontal dimension angle and a vertical dimension angle; and
determine the measurement constraint information based on the predicted location, location information of the base station, and the angle information.

In an embodiment, the first location information includes angle information of an uplink signal and/or received power information of the uplink signal.

An embodiment of the present application further provides a non-transitory computer readable storage medium having a computer program stored thereon that cause a processor to perform the steps of the measurement methods for positioning described above in an embodiment or in another embodiment.

In the measurement methods and apparatuses for positioning, and the storage medium according to embodiments of the present application, the UE or the base station is required to only measure reference signals in effective direction by introducing measurement constraint information for restricting positioning measurement, which reduces the measurement complexity of the UE and the base station and further reduces the positioning delay.

### BRIEF DESCRIPTION OF THE DRAWINGS

In order to clearly illustrate solutions disclosed in the embodiments of the present application or the related art, the drawings used in the descriptions of the embodiments or the related art are briefly described below. The drawings in the following description are only certain embodiments of the present application, and other drawings can be obtained according to the drawings without creative work for those skilled in the art.
FIG. 1 is a schematic flow chart of a measurement method for positioning according to an embodiment of the present application;
FIG. 2 is a schematic flow chart of a measurement method for positioning according to another embodiment of the present application;
FIG. 3 is a schematic diagram of an environment to which a measurement method for positioning is applied according to an embodiment of the present application;
FIG. 4 is a schematic structural diagram of a target device according to an embodiment of the present application;
FIG. 5 is a schematic structural diagram of a location management function according to an embodiment of the present application;
FIG. 6 is a schematic structural diagram of a measurement apparatus for positioning according to an embodiment of the present application; and
FIG. 7 is a schematic structural diagram of a measurement apparatus for positioning according to another embodiment of the present application.

### DETAILED DESCRIPTION

In the embodiments of the present application, the term "and/or" describes a related relationship of associated objects, and indicates that there can be three kinds of relationships. For example, A and/or B can represent that A exists alone, A and B exist simultaneously, and B exists alone. Character "j" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only part of the embodiments of the present application, and not all of the embodiments. All other embodiments obtained by a person of ordinary skill in the art based on the embodiments of the present application without creative work are within the scope of the present application.

Embodiments of the present application provide measurement methods and apparatuses for positioning to position a UE.

The methods and the apparatuses are based on the same concept, the implementation of the apparatuses and the methods can be referred to each other since the principles of the methods and the apparatuses are similar, and the same part is not repeated.

In current 5G NR positioning, the UE or the base station is required to measure downlink or uplink reference signals and report measurement results for positioning. The present application provides measurement methods for positioning with measurement constraints added. By introducing a measurement constraint indication, the UE only measures reference signals in effective directions, which reduces the measurement complexity of the UE and the base station and further reduces the positioning delay.

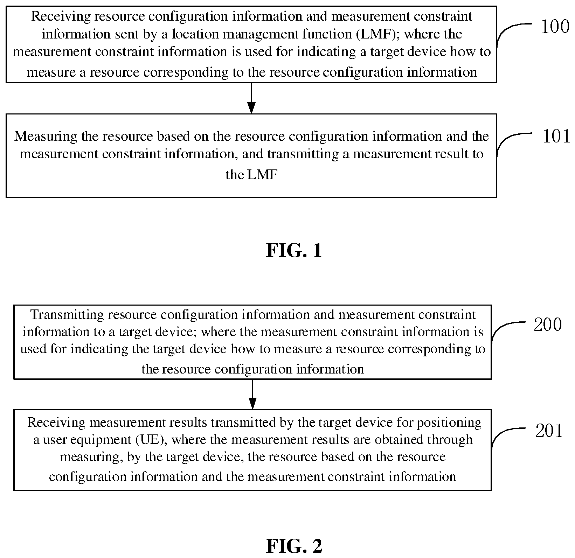

FIG. 1 is a schematic flow chart of a measurement method for positioning according to an embodiment of the present application. As shown in FIG. 1, the method includes the following steps.

Step 100, receiving resource configuration information and measurement constraint information transmitted by a location management function (LMF); where the measurement constraint information is used for indicating a target device how to measure a resource corresponding to the resource configuration information.

During the process of positioning the UE, the target device receives resource configuration information and measurement constraint information transmitted by the LMF. The resource configuration information is used for indicating measurement resources that may be used by the target device during the positioning measurement process, and the measurement constraint information is used for indicating the target device how to measure a resource corresponding to the resource configuration information.

For example, during the positioning measurement process for the target device, not all the resources configured by the resource configuration information will be used, and which resources will be used are specifically indicated by the measurement constraint information. Based on the indication of the measurement constraint information, the target device selects, from the resources configured by the resource configuration information, resources satisfying constraint conditions set by the measurement constraint information to perform actual positioning measurement, to reduce the measurement complexity of the target device and further reduce measurement delay.

Step 101, measuring the resource based on the resource configuration information and the measurement constraint information, and transmitting a measurement result to the LMF.

In an embodiment, after determining the resources that actually need to be measured based on the resource configuration information and measurement constraint information, the target device can measure these resources, obtain measurement results, and transmit the obtained measurement results to the LMF for the LMF performing subsequent positioning operation to position the UE.

In the above embodiments, the target device can be a UE or a base station (gNB), which are described in detail below.

In case that the target device is a user equipment (UE), the resource configuration information can be positioning reference signal (PRS) resource configuration information, and the measurement constraint information can be PRS measurement constraint information.

Accordingly, the PRS measurement constraint information can be used for indicating UE how to measure a PRS resource corresponding to the PRS resource configuration information.

The UE receives the PRS resource configuration information and PRS measurement constraint information indicated by the LMF. The PRS measurement constraint information can be used for indicating PRS resources/PRS resource sets/TRPs that the UE does not to measure, or can be used for indicating PRS resources/PRS resource sets/TRPs with a low measurement priority for the UE, or can be used for indicating PRS resources/PRS resource sets/TRPs that the UE needs to measure. The UE measures the PRS resources according to the PRS resource configuration information and the PRS measurement constraint information, and reports measurement results to the LMF.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set. The indicating the UE how to measure the PRS resource corresponding to the PRS resource configuration information, includes:
indicating the UE not to measure a PRS resource in the second PRS resource set, for example, indicating the UE to only measure a PRS resource in the first PRS resource set other than the second PRS resource set.

In an embodiment, the PRS measurement constraint information can be used for indicating the UE to measure a PRS resource in the second PRS resource set, for example, indicating the UE to only measure a PRS resource in the second PRS resource set.

In an embodiment, the PRS resource in the first PRS resource set correspond to a first priority, the PRS resources in the second PRS resource set correspond to a second priority, and the second priority is lower than the first priority. The PRS measurement constraint information can be used for indicating the UE to perform measurements according to the second priority, for example:
indicating the UE to measure the PRS resource in the first PRS resource set other than the second PRS resource set and determine whether to measure the PRS resources in the second PRS resource set according to first signaling, where the first signaling is configured by the LMF to the UE; or
indicating the UE to measure the PRS resource in the second PRS resource set and determine whether to measure the PRS resource in the first PRS resource set other than the second PRS resource set according to first signaling, where the first signaling is configured by the LMF to the UE.

The UE measures the PRS resources according to the PRS resource configuration information and the PRS measurement constraint information, and reports the measurement result to the LMF.

In case that the target device is a base station, the resource configuration information is sounding reference signal (SRS) resource configuration information, and the measurement constraint information is SRS measurement constraint information.

Accordingly, the SRS measurement constraint information can be used for indicating a base station how to measure an SRS resource corresponding to the SRS resource configuration information.

The base station receives the SRS resource configuration information and SRS measurement constraint information indicated by the LMF. The SRS measurement constraint information can be used for indicating SRS resources/SRS resource sets that the base station does not measure, or can be used for indicating SRS resources/SRS resource sets with a low measurement priority for the base station, or can be used for indicating SRS resources/SRS resource sets that the base station needs to measure. The base station measures the SRS resources according to the SRS resource configuration information and the SRS measurement constraint information, and reports measurement results to the LMF.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set. The indicating the base station how to measure the SRS resource corresponding to the SRS resource configuration information, includes:
indicating the base station not to measure an SRS resource in the second SRS resource set, for example, indicating the base station to only measure an SRS resource in the first SRS resource set other than the second SRS resource set.

In an embodiment, the SRS measurement constraint information can be used for indicating the base station to measure an SRS resource in the second SRS resource set, for example, indicating the base station to only measure an SRS resources in the second SRS resource set.

In an embodiment, the SRS resource in the first SRS resource set correspond to a first priority, the SRS resource in the second SRS resource set correspond to a second priority, and the second priority is lower than the first priority. The SRS measurement constraint information can be used for indicating the base station to perform measurements according to the second priority, for example:
indicating the base station to measure the SRS resource in the first SRS resource set other than the second SRS resource set and determine whether to measure the SRS resource in the second SRS resource set according to first signaling, where the first signaling is configured by the LMF to the base station; or
indicating the base station to measure the SRS resource in the second SRS resource set and determine whether to measure the SRS resource in the first SRS resource set other than the second SRS resource set according to first signaling, where the first signaling is configured by the LMF to the base station.

In above various embodiments, the base station is further used for transmitting first location information of the UE to the LMF to indicate a predicted location of the UE. In an embodiment, a serving base station for the UE reports the first location information of the UE to the LMF, where the first location information indicates a possible location range or prior location information of the UE, and the LMF can determine resources that actually need to be measured during the process for positioning based on the first location information, to reduce both the complexity of measurement and the positioning delay.

In above various embodiments, the first location information can include angle information of an uplink signal and/or received power information of the uplink signal. After receiving the uplink signal transmitted by the UE, the base station acquires the angle information and/or received power information of the uplink signal, and then reports it to the LMF.

In an embodiment, in above various embodiments, the method further includes:
transmitting, by the base station, angle information corresponding to the SRS resource to the LMF, where the angle information includes a horizontal dimension angle and a vertical dimension angle; and/or
transmitting, by the base station, angle information corresponding to the PRS resource to the LMF, where the angle information includes a horizontal dimension angle and a vertical dimension angle.

In the measurement method for positioning with measurement constraints added according to the embodiment of the present application, by introducing the measurement constraint indication, the UE and the base station only measure reference signals in effective directions, which reduces the measurement complexity of the UE and the base station and further reduces the positioning delay.

FIG. 2 is a schematic flow chart of a measurement method for positioning according to another embodiment of the present application. As shown in FIG. 2, the method includes the following steps:
step 200, transmitting resource configuration information and measurement constraint information to a target device; where the measurement constraint information is used for indicating the target device how to measure a resource corresponding to the resource configuration information; and
step 201, receiving measurement results transmitted by the target device for positioning a user equipment (UE), where the measurement results are obtained through measuring, by the target device, the resource based on the resource configuration information and the measurement constraint information.

In the embodiment of the present application, the method can be performed by the LMF and the target device can be a UE or a base station as described in the method embodiment above. In case that the target device is a user equipment (UE), the positioning method of the present application is downlink positioning; and in case that the target device is the base station, the positioning method of the present application is uplink positioning.

In downlink positioning, the target device is a user equipment (UE). The resource configuration information is positioning reference signal (PRS) resource configuration information, and the measurement constraint information is PRS measurement constraint information; where the measurement constraint information is used for indicating the target device how to measure a resource corresponding to the resource configuration information, can be that the PRS measurement constraint information is used for indicating the UE how to measure a PRS resource corresponding to the PRS resource configuration information. In an embodiment, the PRS measurement constraint information is used for indicating PRS resources/PRS resource sets/TRPs that the UE does not measure, or PRS resources/PRS resource sets/TRPs with a low measurement priority for UE or PRS resources/PRS resource sets/TRPs that the UE needs to measure.

The LMF receives PRS measurement values reported by the UE. The PRS measurement values are obtained by the UE measuring PRS resources according to the PRS resource configuration information and the PRS measurement constraint information and reported by the UE. The LMF determines the location of the UE according to the PRS measurement values.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set.

In an embodiment, the indicating the UE how to measure the PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In uplink positioning, the target device is the base station. The resource configuration information is sounding reference signal (SRS) resource configuration information, and the measurement constraint information is SRS measurement constraint information;
the SRS measurement constraint information can be used for indicating the base station how to measure an SRS resource corresponding to the SRS resource configuration information. In an embodiment, the SRS measurement constraint information is used for indicating SRS resources/SRS resource sets that the base station does not measure, or SRS resources/SRS resource sets with a low measurement priority for the base station or SRS resources/SRS resource sets that the base station needs to measure.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes:
indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

The LMF receives SRS measurement values reported by the base station. The SRS measurement values are obtained by the base station measuring SRS resources according to the SRS resource configuration information and the SRS measurement constraint information and reported by the base station. The LMF determines the location of the UE according to the SRS measurement values.

In an embodiment, in above various embodiments, the method can further include:
receiving first location information of the UE, and determining a predicted location of the LTE based on the first location information;
receiving angle information of resources corresponding to the resource configuration information, where the angle information includes a horizontal dimension angle and a vertical dimension angle; and
determining the measurement constraint information based on the predicted location, location information of the base station, and the angle information.

In an embodiment, the LMF receives first location information reported by a serving server for the UE. The first location information is used for indicating a possible location range or prior location information of the UE. The first location information includes angle information of an uplink signal and/or received power information of the uplink signal. The LMF can further receive angle information corresponding to each PRS resource reported by the base station, where the angle information includes a horizontal dimension angle and a vertical dimension angle. The LMF can further receive angle information corresponding to each SRS resource reported by the base station, where the angle information includes a horizontal dimension angle and a vertical dimension angle.

In the measurement method for positioning with measurement constraints added according to the embodiment of the present application, by introducing the measurement constraint indication, the UE and the base station only measure reference signals in effective directions, which reduces the measurement complexity of the UE and the base station and further reduces the positioning delay.

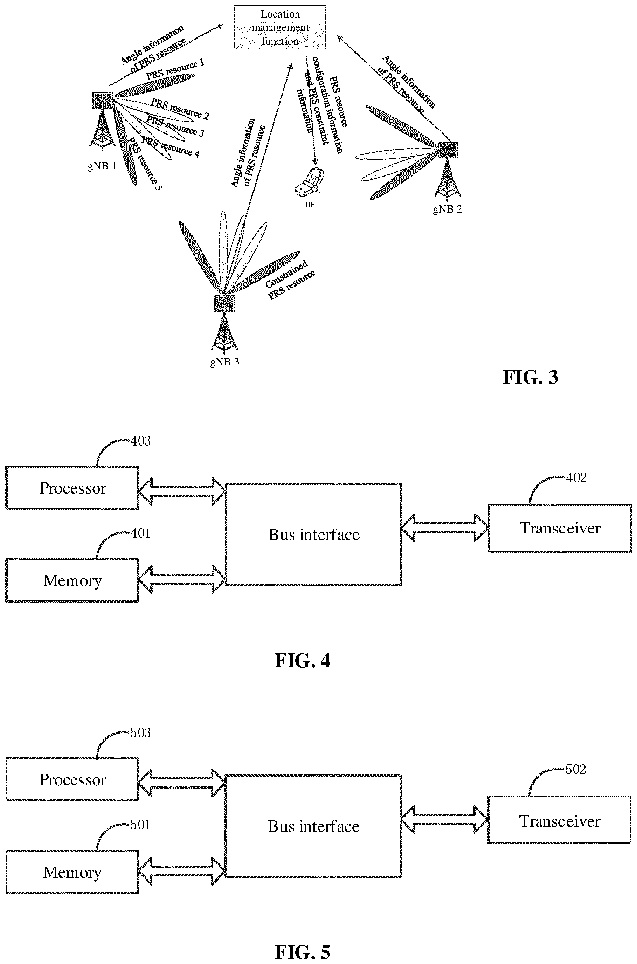

FIG. 3 is a schematic diagram of an environment to which a measurement method for positioning is applied according to an embodiment of the present application. As shown in FIG. 3, three examples are described below in conjunction with FIG. 3 to further introduce the solution of the present application.

### Example 1:

During downlink positioning, each of N (being equal to 16) gNBs sends M (being equal to 8) PRS resources, and each PRS resource is beam-formed differently and pointed to different directions. The direction of each PRS resource is described by the horizontal dimension angle ϕ and the vertical dimension angle θ, and the values of the angles are determined by the gNB itself. The LMF configures the UE to report RSTD measurement value, and indicates, through the LPP protocol, the N (being equal to 16) gNBs and the configuration information of the M (being equal to 8) PRS resources transmitted by each gNB to the UE to be positioned.

A serving gNB for the UE measures the uplink signal transmitted by the UE, such as an uplink SRS reference signal, and can determine its horizontal dimension angle of arrival and vertical dimension angle of arrival. The serving gNB can report the horizontal dimension angle of arrival and the vertical dimension angle of arrival as first location information to the LMF. The LMF can determine a rough location of the UE according to a cell identity of the serving cell and the angles of arrival.

N (being equal to 16) gNBs all report the horizontal dimension and vertical dimension angles of each PRS resource to the LMF.

The LMF can determine that all PRS resources transmitted by some gNBs in the N (being equal to 16) gNBs do not point to the UE to be positioned and some PRS resources transmitted by some gNBs do not point to the UE to be positioned according to the rough position of the UE, the location information of N (being equal to 16) gNBs, and the angle information of each PRS resource. These PRS resources do not need to be measured by the UE, can not provide effective information for positioning, and increase the measurement complexity of the UE. Therefore, the LMF can determine PRS measurement constraint information. For example, the measurement constraint information indicates that all PRS resources transmitted by gNB0, gNB3, gNB5, and gNB11 do not need to be measured, and PRS resource 0, PRS resource 6 and PRS resource 7 in the PRS resource set transmitted by gNB 1 do not need to be measured.

When reporting measurement, the UE measures all PRS resources transmitted by gNBs other than gNB0, gNB3, gNB5, gNB11 and gNB1. For example, the UE determines, among the M (being equal to 8) PRS resources transmitted by gNB2, TOA of a first path for an optimal PRS resource, such as the TOA of a first path for PRS resource 2, and uses a difference between it and the TOA of the reference resource as the RSTD of gNB2 and reports the difference. The reference resource can be configured by the LMF. Other gNBs are similar to gNB2 and are not repeated here. PRS resources in the PRS resource set transmitted by gNB 1 other than PRS resources 0/6/7 are measured. The UE determines TOA of a first path for an optimal PRS resource, such as the TOA of a first path for PRS resource 5, and uses a difference between it and the TOA of the reference resource as the RSTD of gNB 1 and reports the difference. In this case, the UE only measures part of the PRS resources, which reduces measurement complexity.

After receiving the RSTD measurements reported by the UE, the LMF performs positioning calculation for the UE to determine the location of the UE.

### Example 2

During downlink positioning, each of N (being equal to 16) gNBs transmits M (being equal to 8) PRS resources, and each PRS resource is beam-formed differently and pointed to different directions. The direction of each PRS resource is described by the horizontal dimension angle ϕ and the vertical dimension angle θ, and the values of the angles are determined by the gNB itself. The LMF configures the UE to report RSTD measurement value, and indicates, through the LPP protocol, the N (being equal to 16) gNBs and the configuration information of the M (being equal to 8) PRS resources transmitted by each gNB to the UE to be positioned.

A serving gNB for the UE measures the uplink signal transmitted by the UE, such as an uplink SRS reference signal, and can determine its horizontal dimension angle of arrival and vertical dimension angle of arrival. The serving gNB can report the horizontal dimension angle of arrival and the vertical dimension angle of arrival as first location information to the LMF. The LMF can determine a rough location of the UE according to a cell identity of the serving cell and the angles of arrival.

N (being equal to 16) gNBs all report the horizontal dimension and vertical dimension angles of each PRS resource to the LMF.

The LMF can determine that part of PRS resources transmitted by some gNBs among the N (being equal to 16) gNBs has good directionality with respect to the UE to be positioned according to the rough position of the UE, the location information of N (being equal to 16) gNBs, and the angle information of each PRS resource. These PRS resources can be defined as PRS resources with high measurement priority. Therefore, the LMF can determine PRS measurement constraint information, which indicates PRS resources with low measurement priority.

The LMF can instruct the UE to report only the measurement results of PRS resources with high measurement priority or to report the measurement results of all PRS resources through the first signaling. For example, in a scenario where the requirement for positioning accuracy is not high, the LMF instructs the UE to measure only PRS resources with high measurement priority through the first signaling. In this way, the first signaling can be configured as `ON', to reduce the measurement complexity of the UE. If there is a high positioning requirement in some scenarios, the first signaling is configured as `OFF'. At this time, the UE measures all PRS resources to obtain more measurement values, which improves precision for positioning.

After receiving the RSTD measurements reported by the UE, the LMF performs positioning calculation for the UE to determine the location of the UE.

### Example 3:

For uplink positioning, the LMF configures the UE to transmit M (being equal to 16) SRS resources, and each SRS resource is beam-formed differently and points to different directions. The LMF configures each of P (being equal to 3) gNBs (denoted as gNB0, gNB1 and gNB2) to report the angle measurement values. The angle measurement values include A-AoA and Z-AoA. The LMF configures the M (being equal to 16) SRS resources to each gNB.

A serving gNB for the UE measures the uplink signal transmitted by the UE, such as an uplink SRS reference signal, and can determine its horizontal dimension angle of arrival and vertical dimension angle of arrival. The serving gNB can report the horizontal dimension angle of arrival and the vertical dimension angle of arrival as first location information to the LMF. Further, the UE measures the downlink signal transmitted by the serving gNB, such as SSB, to obtain the signal received power, and reports the signal received power to the LMF. The LMF can determine a rough location of the UE according to a cell identity of the serving cell, the angles of arrival and the signal received power.

The gNB of the serving cell reports the horizontal dimension angle and the vertical dimension angle of each resource among M (being equal to 16) SRS resources to the LMF. The horizontal dimension angle and the vertical dimension angle can be determined according to angle information of the downlink reference signal (SSB/CSI-RS) corresponding to the QCL information of the SRS resource configured by the gNB of the serving cell based on the reciprocity of the uplink and downlink beams.

The LMF can determine that each gNB only measures part of the SRS resources pointing to this gNB, without measuring all M (being equal to 16) SRS resources, according to the rough location of the UE, the location information of P (being equal to 3) gNBs and the angle information of each SRS resource. Therefore, the LMF can determine the SRS measurement constraint information of each gNB and configure it for each gNB.

In this way, when performing measurement and reporting, the gNB only measures the unconstrained SRS resources, obtain the A-AOA and Z-AOA corresponding to the optimal SRS resources, and report them to the LMF, which can reduce the measurement complexity on the gNB side.

After receiving the angle measurements reported by the gNB, the LMF performs positioning calculation for the UE to determine the location of the UE.

In the measurement method for positioning according to the embodiment of the present application, by introducing a measurement constraint indication, the UE and the base station only measure reference signals in effective directions, which reduces the measurement complexity of the UE and the base station and further reduces the positioning delay.

The solutions according to the embodiments of the present application can be applicable to various systems, especially 5G systems. For example, applicable systems can be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal and a network device. The system can further include a core network part, such as an evolved packet system (EPS), a 5G system (5GS), and the like.

The terminal in the embodiments of the present application can be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A wireless terminal can communicate with one or more core networks (CN) via a radio access network (RAN), and the wireless terminal can be a mobile terminal, such as a mobile phone (or cellular phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The base station in the embodiments of the present application can include a plurality of cells providing services for the UE. Depending on the specific application, the base station may be called an access point, or may be a device in the access network that communicates with wireless terminal through one or more sectors on the air interface, or other names. Network device can be used to exchange received air frames with Internet Protocol (IP) packets, and act as a router between wireless terminal and the rest of the access network, and the rest of the access network can include an Internet Protocol (IP) communication network. The network devices can also coordinate attribute management for the air interface. For example, the network device in the embodiments of the present application may be a base transceiver station (BTS) in a global system for mobile communications (GSM) or a code division multiple access (CDMA), may be a node B in a wide-band code division multiple access (WCDMA), may be an evolutional node B (eNB or e-Node B) in a long term evolution (LTE) system, a 5G base station (gNB) in 5G network architecture (next generation system), may be a home evolved node B (HeNB), a relay node (relay node), a family base station (femto), a pico base station (pico), etc., which are not limited in the embodiments of the present application. In some network structures, a network device can include a centralized unit (CU) node and a distributed unit (DU) node, and the centralized unit and the distributed unit can be geographically separated.

FIG. 4 is a schematic structural diagram of a target device according to an embodiment of the present application. As shown in FIG. 4, the target device includes a memory 401, a transceiver 402, and a processor 403, in which:
the memory 401 is configured to store a computer program; the transceiver 402 is configured to transmit and receive data under a control of the processor; the processor 403 is configured to read the computer program in the memory and perform the following operations:
receiving resource configuration information and measurement constraint information transmitted by a location management function (LMF); where the measurement constraint information is used for indicating a target device how to measure a resource corresponding to the resource configuration information; and
measuring the resource based on the resource configuration information and the measurement constraint information, and transmitting a measurement result to the LMF.

In an embodiment, in case that the target device is a user equipment (UE), the resource configuration information is positioning reference signal (PRS) resource configuration information, and the measurement constraint information is PRS measurement constraint information;
the PRS measurement constraint information can be used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set.

In an embodiment, the indicating the UE how to measure the PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

The transceiver 402 is used to receive and transmit data under the control of the processor 403.

In FIG. 4, a bus architecture can include any number of interconnected buses and bridges, which are linked together through various circuits of one or more processors represented by processor 403 and one or more memories represented by the memory 401. The bus architecture can further link together various other circuits, such as peripherals, voltage regulators, and power management circuits. The bus interface provides an interface. Transceiver 402 can be multiple elements, i.e., including a transmitter and a receiver, and the transceiver 402 provides units for communicating with various other devices over transmission media including wireless channels, wired channels, fiber optic cables, and the like. For different user equipment, the user interface may be an interface capable of externally or internally connecting the required equipment, and the connected equipment includes, but not limited to, a keypad, a display, a speaker, a microphone, a joystick, and the like.

The processor 403 is responsible for managing the bus architecture and general processing, and the memory 401 can store data used by the processor 403 when performing operations.

The processor 403 can be a central processing unit (CPU), an application specific integrated circuit (ASIC), a field-programmable gate array (FPGA), or a complex programmable logic device (CPLD), the processor can also use a multi-core architecture.

In an embodiment, in case that the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes: indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the operations further include: transmitting first location information of the UE to the LMF to indicate a predicted location of the UE.

In an embodiment, the first location information includes angle information of an uplink signal and/or received power information of the uplink signal.

In an embodiment, the operation further includes:
transmitting angle information corresponding to the SRS resource to the LMF, where the angle information includes a horizontal dimension angle and a vertical dimension angle; and/or
transmitting angle information corresponding to the PRS resource to the LMF, where the angle information includes a horizontal dimension angle and a vertical dimension angle.

The transceiver 402 is used to receive and transmit data under the control of the processor 403.

In FIG. 4, a bus architecture can include any number of interconnected buses and bridges, which are linked together through various circuits of one or more processors represented by processor 403 and one or more memories represented by the memory 401. The bus architecture can further link together various other circuits, such as peripherals, voltage regulators, and power management circuits. The bus interface provides an interface. Transceiver 402 can be multiple elements, i.e., including a transmitter and a receiver, and the transceiver 402 provides units for communicating with various other devices over transmission media including wireless channels, wired channels, fiber optic cables, and the like. The processor 403 is responsible for managing the bus architecture and general processing, and the memory 401 can store data used by the processor 403 when performing operations.

The processor 403 can be a central processing unit (CPU), an application specific integrated circuit (ASIC), a field-programmable gate array (FPGA), or a complex programmable logic device (CPLD), the processor can also use a multi-core architecture.

FIG. 5 is a schematic structural diagram of a location management function according to an embodiment of the present application. As shown in FIG. 5, the location management function (LMF) includes a memory 501, a transceiver 502, and a processor 503, in which:
the memory 501 is configured to store a computer program; the transceiver 502 is configured to transmit and receive data under a control of the processor; the processor 503 is configured to read the computer program in the memory and perform the following operations:
transmitting resource configuration information and measurement constraint information to a target device; where the measurement constraint information is used for indicating the target device how to measure a resource corresponding to the resource configuration information; and
receiving measurement results transmitted by the target device for positioning a user equipment (UE), where the measurement results are obtained through measuring, by the target device, the resource based on the resource configuration information and the measurement constraint information.

In an embodiment, the target device is a user equipment (UE); the resource configuration information is positioning reference signal (PRS) resource configuration information, and the measurement constraint information is PRS measurement constraint information;
the PRS measurement constraint information can be used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set;
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes: indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the operations further include:
receiving first location information of the UE, and determining a predicted location of the LTE based on the first location information;
receiving angle information of resources corresponding to the resource configuration information, where the angle information includes a horizontal dimension angle and a vertical dimension angle; and
determining the measurement constraint information based on the predicted location, location information of the base station, and the angle information.

In an embodiment, the first location information includes angle information of an uplink signal and/or received power information of the uplink signal.

The transceiver 502 is used to receive and transmit data under the control of the processor 503.

In FIG. 5, a bus architecture can include any number of interconnected buses and bridges, which are linked together through various circuits of one or more processors represented by processor 503 and one or more memories represented by the memory 501. The bus architecture can further link together various other circuits, such as peripherals, voltage regulators, and power management circuits. The bus interface provides an interface. Transceiver 502 can be multiple elements, i.e., including a transmitter and a receiver, and the transceiver 502 provides units for communicating with various other devices over transmission media including wireless channels, wired channels, fiber optic cables, and the like. The processor 503 is responsible for managing the bus architecture and general processing, and the memory 501 can store data used by the processor 503 when performing operations.

The processor 503 can be a central processing unit (CPU), an application specific integrated circuit (ASIC), a field-programmable gate array (FPGA), or a complex programmable logic device (CPLD), the processor can also use a multi-core architecture.

In various embodiments, the processor is configured to perform any one of the methods of the embodiments of the present application based on the obtained executable instructions by invoking the computer program stored in the memory. The processor and memory may be physically separated.

It should be noted here that the above-mentioned devices according to the embodiments of the present application can implement all the method steps implemented by the above-mentioned method embodiments, and can achieve the same effect. The same parts and beneficial effects as the method embodiments are not repeated here.

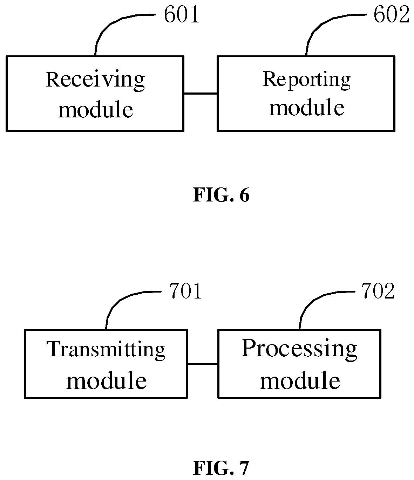

FIG. 6 is a schematic structural diagram of a measurement apparatus for positioning according to an embodiment of the present application. As shown in FIG. 6, the measurement apparatus includes a receiving module 601, and a reporting module 602, in which:
the receiving module 601, configured to receive resource configuration information and measurement constraint information transmitted by a location management function (LMF); where the measurement constraint information is used for indicating a target device how to measure a resource corresponding to the resource configuration information; and the reporting module 602, configured to measure the resource based on the resource configuration information and the measurement constraint information, and transmit measurement results to the LMF.

In an embodiment, the measurement apparatus for positioning can be a user equipment (UE); correspondingly, the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set;
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the measurement apparatus for positioning can be a base station; correspondingly, the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set,
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes: indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the reporting module 602 is further configured to: transmit first location information of the UE to the LMF to indicate a predicted location of the UE.

In an embodiment, the first location information includes angle information of an uplink signal and/or received power information of the uplink signal.

In an embodiment, the reporting module 602 is further configured to:
transmit angle information corresponding to the SRS resource to the LMF, where the angle information includes a horizontal dimension angle and a vertical dimension angle; and/or
transmit angle information corresponding to the PRS resource to the LMF, where the angle information includes a horizontal dimension angle and a vertical dimension angle.

In the measurement apparatuses for positioning according to various embodiments of the present application, the UE or the base station is required to only measure reference signals in effective direction by introducing measurement constraint information for restricting positioning measurements, which reduces the measurement complexity of the UE and the base station and further reduces the positioning delay.

FIG. 7 is a schematic structural diagram of a measurement apparatus for positioning according to another embodiment of the present application. As shown in FIG. 7, the measurement apparatus includes a transmitting module 701, and a processing module 702, in which:
the transmitting module 701, configured to transmit resource configuration information and measurement constraint information to a target device; where the measurement constraint information is used for indicating the target device how to measure a resource corresponding to the resource configuration information; and the processing module 702, configured to receive measurement results transmitted by the target device for positioning a user equipment (UE), where the measurement results are obtained through measuring, by the target device, the resource based on the resource configuration information and the measurement constraint information.

In an embodiment, the target device is a user equipment (UE); the resource configuration information is positioning reference signal (PRS) resource configuration information, and the measurement constraint information is PRS measurement constraint information;
the PRS measurement constraint information is used for indicating UE how to measure a PRS resource corresponding to the PRS resource configuration information.

In an embodiment, a first PRS resource set includes PRS resources corresponding to the PRS resource configuration information, a second PRS resource set includes PRS resources corresponding to the PRS measurement constraint information, and the second PRS resource set is a subset of the first PRS resource set,
the indicating UE how to measure a PRS resource corresponding to the PRS resource configuration information, includes:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, where the second priority is lower than a first priority corresponding to the PRS resource in the first PRS resource set.

In an embodiment, the indicating the UE not to measure a PRS resource in the second PRS resource set includes: indicating the UE to only measure a PRS resource in the first PRS resource set other than the second PRS resource set; or
the indicating the UE to measure a PRS resource in the second PRS resource set includes: indicating the UE to only measure a PRS resource in the second PRS resource set; or
the indicating the UE to perform measurements according to the second priority corresponding to the PRS resource in the second PRS resource set, includes:
   indicating the UE to measure the PRS resource in the first PRS resource set other than the second PRS resource set and determine whether to measure the PRS resources in the second PRS resource set according to first signaling, where the first signaling is configured by the LMF to the UE; or
   indicating the UE to measure the PRS resource in the second PRS resource set and determine whether to measure the PRS resource in the first PRS resource set other than the second PRS resource set according to first signaling, where the first signaling is configured by the LMF to the UE.

In an embodiment, the target device is a base station; the resource configuration information is sounding reference signal (SRS) resource configuration information, and the measurement constraint information is SRS measurement constraint information;
the SRS measurement constraint information is used for indicating the base station how to measure an SRS resource corresponding to the SRS resource configuration information.

In an embodiment, a first SRS resource set includes SRS resources corresponding to the SRS resource configuration information, a second SRS resource set includes SRS resources corresponding to the SRS measurement constraint information, and the second SRS resource set is a subset of the first SRS resource set,
the indicating the base station how to measure an SRS resource corresponding to the SRS resource configuration information, includes:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, where the second priority is lower than a first priority corresponding to the SRS resource in the first SRS resource set.

In an embodiment, the indicating the base station not to measure an SRS resource in the second SRS resource set includes: indicating the base station to only measure an SRS resource in the first SRS resource set other than the second SRS resource set; or
the indicating the base station to measure an SRS resource in the second SRS resource set includes: indicating the base station to only measure an SRS resources in the second SRS resource set; or
the indicating the base station to perform measurements according to the second priority corresponding to the SRS resource in the second SRS resource set, includes:
   indicating the base station to measure the SRS resource in the first SRS resource set other than the second SRS resource set and determine whether to measure the SRS resource in the second SRS resource set according to first signaling, where the first signaling is configured by the LMF to the base station; or
   indicating the base station to measure the SRS resource in the second SRS resource set and determine whether to measure the SRS resource in the first SRS resource set other than the second SRS resource set according to first signaling, where the first signaling is configured by the LMF to the base station.

In an embodiment, the processing module 702 is further configured to:
receive first location information of the UE, and determine a predicted location of the UE based on the first location information;
receive angle information of resources corresponding to the resource configuration information, where the angle information includes a horizontal dimension angle and a vertical dimension angle; and
determine the measurement constraint information based on the predicted location, location information of the base station, and the angle information.

In an embodiment, the first location information includes angle information of an uplink signal and/or received power information of the uplink signal.

In the measurement apparatuses for positioning according to various embodiments of the present application, the UE or the base station is required to only measure reference signals in effective direction by introducing measurement constraint information for restricting positioning measurements, which reduces the measurement complexity of the UE and the base station and further reduces the positioning delay.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit can be implemented in the form of hardware or software functional unit.

If the integrated unit is implemented in the form of a software functional unit and sold or used as an independent product, it can be stored in a computer readable storage medium. Based on such understanding, the solutions of the present application in essence or a part of the solutions that contributes to the prior art, or all or part of the solutions, can be embodied in the form of a software product, which is stored in a storage medium, including several instructions to cause a computer device (which can be a personal computer, server, or network device, etc.) or a processor to perform all or part of the steps of the methods described in the respective embodiments of the present application. The storage medium described above includes various media that can store program codes such as USB flash disk, mobile hard disk, read-only memory (ROM), random access memory (RAM), magnetic disk, or optical disk.

It should be noted here that the above-mentioned apparatus according to the embodiments of the present application can implement all the method steps implemented by the above-mentioned method embodiments, and can achieve the same effect. The same parts and beneficial effects as the method embodiments are not repeated here.

An embodiment of the present application provides a non-transitory computer readable storage medium having a computer program stored thereon that causes a processor to perform the steps of the methods described above, which, for example, includes:
receiving resource configuration information and measurement constraint information transmitted by a location management function (LMF); where the measurement constraint information is used for indicating a target device how to measure a resource corresponding to the resource configuration information; and
measuring the resource based on the resource configuration information and the measurement constraint information, and transmitting a measurement result to the LMF.

Another embodiment of the present application further provides a non-transitory computer readable storage medium having a computer program stored thereon that causes a processor to perform the steps of the methods described above, which, for example, includes:
transmitting resource configuration information and measurement constraint information to a target device; where the measurement constraint information is used for indicating the target device how to measure a resource corresponding to the resource configuration information; and
receiving measurement results transmitted by the target device for positioning a user equipment (UE), where the measurement results are obtained through measuring, by the target device, the resource based on the resource configuration information and the measurement constraint information.

The computer program stored on above-mentioned computer readable storage medium according to the embodiments of the present application, causes a processor to perform all the method steps implemented by the above-mentioned method embodiments, and can achieve the same effect. The same parts and beneficial effects as the method embodiments are not repeated here.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application can be provided as a method, system, or computer program product. Accordingly, the present application can take the form of an entirely hardware embodiment, an entirely software embodiment, or an embodiment combining software and hardware aspects. Furthermore, the present application can take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions can be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations can be made in the present application without departing from the scope of the present application. Thus, provided that these modifications and variations of the present application are within the scope of the claims of the present application and their equivalents, the present
application is also intended to cover such modifications and variations.

## Claims

1. A measurement method for positioning, comprising:
receiving resource configuration information and measurement constraint information transmitted by a location management function, LMF; where the measurement constraint information is used for indicating a target device how to measure a resource corresponding to the resource configuration information; and
measuring the resource based on the resource configuration information and the measurement constraint information, and transmitting a measurement result to the LMF.

2. The method of claim 1, wherein the target device is a user equipment, LTE; the resource configuration information is positioning reference signal, PRS, resource configuration information, and the measurement constraint information is PRS measurement constraint information;
the PRS measurement constraint information is used for indicating UE how to measure a PRS resource corresponding to the PRS resource configuration information.

3. The method of claim 2, wherein a first PRS resource set comprises PRS resources corresponding to the PRS resource configuration information, a second PRS resource set comprises PRS resources corresponding to the PRS measurement constraint information, and the second PRS resource set is a subset of the first PRS resource set;
the indicating UE how to measure a PRS resource corresponding to the PRS resource configuration information, comprises:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, wherein the second priority is lower than a first priority corresponding to the PRS resource in the first PRS resource set.

4. The method of claim 3, wherein the indicating the UE not to measure a PRS resource in the second PRS resource set comprises: indicating the UE to only measure a PRS resource in the first PRS resource set other than the second PRS resource set; or
the indicating the UE to measure a PRS resource in the second PRS resource set comprises: indicating the UE to only measure a PRS resource in the second PRS resource set; or
the indicating the UE to perform measurements according to the second priority corresponding to the PRS resource in the second PRS resource set, comprises:
indicating the UE to measure the PRS resource in the first PRS resource set other than the second PRS resource set and determine whether to measure the PRS resources in the second PRS resource set according to first signaling, wherein the first signaling is configured by the LMF to the LTE; or
indicating the UE to measure the PRS resource in the second PRS resource set and determine whether to measure the PRS resource in the first PRS resource set other than the second PRS resource set according to first signaling, wherein the first signaling is configured by the LMF to the UE.

5. The method of claim 1, wherein the target device is a base station; the resource configuration information is sounding reference signal, SRS, resource configuration information, and the measurement constraint information is SRS measurement constraint information;
the SRS measurement constraint information is used for indicating the base station how to measure an SRS resource corresponding to the SRS resource configuration information.

6. The method of claim 5, wherein a first SRS resource set comprises SRS resources corresponding to the SRS resource configuration information, a second SRS resource set comprises SRS resources corresponding to the SRS measurement constraint information, and the second SRS resource set is a subset of the first SRS resource set;
the indicating the base station how to measure an SRS resource corresponding to the SRS resource configuration information, comprises:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, wherein the second priority is lower than a first priority corresponding to the SRS resource in the first SRS resource set.

7. The method of claim 6, wherein the indicating the base station not to measure an SRS resource in the second SRS resource set comprises: indicating the base station to only measure an SRS resource in the first SRS resource set other than the second SRS resource set; or
the indicating the base station to measure an SRS resource in the second SRS resource set comprises: indicating the base station to only measure an SRS resources in the second SRS resource set; or
the indicating the base station to perform measurements according to the second priority corresponding to the SRS resource in the second SRS resource set, comprises:
indicating the base station to measure the SRS resource in the first SRS resource set other than the second SRS resource set and determine whether to measure the SRS resource in the second SRS resource set according to first signaling, wherein the first signaling is configured by the LMF to the base station; or
indicating the base station to measure the SRS resource in the second SRS resource set and determine whether to measure the SRS resource in the first SRS resource set other than the second SRS resource set according to first signaling, wherein the first signaling is configured by the LMF to the base station.

8. The method of any of claims 5 to 7, further comprising:
transmitting first location information of the UE to the LMF to indicate a predicted location of the UE.

9. The method of claim 8, wherein the first location information comprises angle information of an uplink signal and/or received power information of the uplink signal.

10. The method of any of claims 5 to 7, further comprising:
transmitting angle information corresponding to the SRS resource to the LMF, wherein the angle information comprises a horizontal dimension angle and a vertical dimension angle; and/or
transmitting angle information corresponding to the PRS resource to the LMF, wherein the angle information comprises a horizontal dimension angle and a vertical dimension angle.

11. A measurement method for positioning, comprising:
transmitting resource configuration information and measurement constraint information to a target device; where the measurement constraint information is used for indicating the target device how to measure a resource corresponding to the resource configuration information; and
receiving measurement results transmitted by the target device for positioning a user equipment, UE, wherein the measurement results are obtained through measuring, by the target device, the resource based on the resource configuration information and the measurement constraint information.

12. The method of claim 11, wherein the target device is a user equipment, UE; the resource configuration information is positioning reference signal, PRS, resource configuration information, and the measurement constraint information is PRS measurement constraint information;
the PRS measurement constraint information is used for indicating UE how to measure a PRS resource corresponding to the PRS resource configuration information.

13. The method of claim 12, wherein a first PRS resource set comprises PRS resources corresponding to the PRS resource configuration information, a second PRS resource set comprises PRS resources corresponding to the PRS measurement constraint information, and the second PRS resource set is a subset of the first PRS resource set;
the indicating UE how to measure a PRS resource corresponding to the PRS resource configuration information, comprises:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, wherein the second priority is lower than a first priority corresponding to the PRS resource in the first PRS resource set.

14. The method of claim 13, wherein the indicating the UE not to measure a PRS resource in the second PRS resource set comprises: indicating the UE to only measure a PRS resource in the first PRS resource set other than the second PRS resource set; or
the indicating the UE to measure a PRS resource in the second PRS resource set comprises: indicating the UE to only measure a PRS resource in the second PRS resource set; or
the indicating the UE to perform measurements according to the second priority corresponding to the PRS resource in the second PRS resource set, comprises:
indicating the UE to measure the PRS resource in the first PRS resource set other than the second PRS resource set and determine whether to measure the PRS resources in the second PRS resource set according to first signaling, wherein the first signaling is configured by the LMF to the UE; or
indicating the UE to measure the PRS resource in the second PRS resource set and determine whether to measure the PRS resource in the first PRS resource set other than the second PRS resource set according to first signaling, wherein the first signaling is configured by the LMF to the UE.

15. The method of claim 11, wherein the target device is a base station; the resource configuration information is sounding reference signal, SRS, resource configuration information, and the measurement constraint information is SRS measurement constraint information;
the SRS measurement constraint information is used for indicating the base station how to measure an SRS resource corresponding to the SRS resource configuration information.

16. The method of claim 15, wherein a first SRS resource set comprises SRS resources corresponding to the SRS resource configuration information, a second SRS resource set comprises SRS resources corresponding to the SRS measurement constraint information, and the second SRS resource set is a subset of the first SRS resource set;
the indicating the base station how to measure an SRS resource corresponding to the SRS resource configuration information, comprises:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, wherein the second priority is lower than a first priority corresponding to the SRS resource in the first SRS resource set.

17. The method of claim 16, wherein the indicating the base station not to measure an SRS resource in the second SRS resource set comprises: indicating the base station to only measure an SRS resource in the first SRS resource set other than the second SRS resource set; or
the indicating the base station to measure an SRS resource in the second SRS resource set comprises: indicating the base station to only measure an SRS resources in the second SRS resource set; or
the indicating the base station to perform measurements according to the second priority corresponding to the SRS resource in the second SRS resource set, comprises:
indicating the base station to measure the SRS resource in the first SRS resource set other than the second SRS resource set and determine whether to measure the SRS resource in the second SRS resource set according to first signaling, wherein the first signaling is configured by the LMF to the base station; or
indicating the base station to measure the SRS resource in the second SRS resource set and determine whether to measure the SRS resource in the first SRS resource set other than the second SRS resource set according to first signaling, wherein the first signaling is configured by the LMF to the base station.

18. The method of any of claims 11 to 17, further comprising:
receiving first location information of the UE, and determining a predicted location of the LTE based on the first location information;
receiving angle information of resources corresponding to the resource configuration information, wherein the angle information comprises a horizontal dimension angle and a vertical dimension angle; and
determining the measurement constraint information based on the predicted location, location information of the base station, and the angle information.

19. The method of claim 18, wherein the first location information comprises angle information of an uplink signal and/or received power information of the uplink signal.

20. A target device, comprising: a memory, a transceiver and a processor,
the memory is configured to store a computer program; the transceiver is configured to transmit and receive data under a control of the processor; and the processor is configured to read the computer program in the memory and perform the following operations of:
receiving resource configuration information and measurement constraint information transmitted by a location management function, LMF; where the measurement constraint information is used for indicating a target device how to measure a resource corresponding to the resource configuration information; and
measuring the resource based on the resource configuration information and the measurement constraint information, and transmitting a measurement result to the LMF.

21. The target device of claim 20, wherein the target device is a user equipment, UE; the resource configuration information is positioning reference signal, PRS, resource configuration information, and the measurement constraint information is PRS measurement constraint information;
the PRS measurement constraint information is used for indicating UE how to measure a PRS resource corresponding to the PRS resource configuration information.

22. The target device of claim 21, wherein a first PRS resource set comprises PRS resources corresponding to the PRS resource configuration information, a second PRS resource set comprises PRS resources corresponding to the PRS measurement constraint information, and the second PRS resource set is a subset of the first PRS resource set;
the indicating UE how to measure a PRS resource corresponding to the PRS resource configuration information, comprises:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, wherein the second priority is lower than a first priority corresponding to the PRS resource in the first PRS resource set.

23. The target device of claim 22, wherein the indicating the UE not to measure a PRS resource in the second PRS resource set comprises: indicating the UE to only measure a PRS resource in the first PRS resource set other than the second PRS resource set; or
the indicating the UE to measure a PRS resource in the second PRS resource set comprises: indicating the UE to only measure a PRS resource in the second PRS resource set; or
the indicating the UE to perform measurements according to the second priority corresponding to the PRS resource in the second PRS resource set, comprises:
indicating the UE to measure the PRS resource in the first PRS resource set other than the second PRS resource set and determine whether to measure the PRS resources in the second PRS resource set according to first signaling, wherein the first signaling is configured by the LMF to the UE; or
indicating the UE to measure the PRS resource in the second PRS resource set and determine whether to measure the PRS resource in the first PRS resource set other than the second PRS resource set according to first signaling, wherein the first signaling is configured by the LMF to the UE.

24. The target device of claim 20, wherein the target device is a base station; the resource configuration information is sounding reference signal, SRS, resource configuration information, and the measurement constraint information is SRS measurement constraint information;
the SRS measurement constraint information is used for indicating the base station how to measure an SRS resource corresponding to the SRS resource configuration information.

25. The target device of claim 24, wherein a first SRS resource set comprises SRS resources corresponding to the SRS resource configuration information, a second SRS resource set comprises SRS resources corresponding to the SRS measurement constraint information, and the second SRS resource set is a subset of the first SRS resource set;
the indicating the base station how to measure an SRS resource corresponding to the SRS resource configuration information, comprises:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, wherein the second priority is lower than a first priority corresponding to the SRS resource in the first SRS resource set.

26. The target device of claim 25, wherein the indicating the base station not to measure an SRS resource in the second SRS resource set comprises: indicating the base station to only measure an SRS resource in the first SRS resource set other than the second SRS resource set; or
the indicating the base station to measure an SRS resource in the second SRS resource set comprises: indicating the base station to only measure an SRS resources in the second SRS resource set; or
the indicating the base station to perform measurements according to the second priority corresponding to the SRS resource in the second SRS resource set, comprises:
indicating the base station to measure the SRS resource in the first SRS resource set other than the second SRS resource set and determine whether to measure the SRS resource in the second SRS resource set according to first signaling, wherein the first signaling is configured by the LMF to the base station; or
indicating the base station to measure the SRS resource in the second SRS resource set and determine whether to measure the SRS resource in the first SRS resource set other than the second SRS resource set according to first signaling, wherein the first signaling is configured by the LMF to the base station.

27. The target device of any one of claims 24 to 26, wherein the operations further comprise:
transmitting first location information of the UE to the LMF to indicate a predicted location of the UE.

28. The target device of claim 27, wherein the first location information comprises angle information of an uplink signal and/or received power information of the uplink signal.

29. The target device of any one of claims 24 to 26, wherein the operations further comprise:
transmitting angle information corresponding to the SRS resource to the LMF, wherein the angle information comprises a horizontal dimension angle and a vertical dimension angle; and/or
transmitting angle information corresponding to the PRS resource to the LMF, wherein the angle information comprises a horizontal dimension angle and a vertical dimension angle.

30. A location management function, LMF, comprising: a memory, a transceiver and a processor,
the memory is configured to store a computer program; the transceiver is configured to transmit and receive data under a control of the processor; and the processor is configured to read the computer program in the memory and perform the following operations of:
transmitting resource configuration information and measurement constraint information to a target device; where the measurement constraint information is used for indicating the target device how to measure a resource corresponding to the resource configuration information; and
receiving measurement results transmitted by the target device for positioning a user equipment, UE, wherein the measurement results are obtained through measuring, by the target device, the resource based on the resource configuration information and the measurement constraint information.

31. The location management function of claim 30, wherein the target device is a user equipment, UE; the resource configuration information is positioning reference signal, PRS, resource configuration information, and the measurement constraint information is PRS measurement constraint information;
the PRS measurement constraint information is used for indicating UE how to measure a PRS resource corresponding to the PRS resource configuration information.

32. The location management function of claim 31, wherein a first PRS resource set comprises PRS resources corresponding to the PRS resource configuration information, a second PRS resource set comprises PRS resources corresponding to the PRS measurement constraint information, and the second PRS resource set is a subset of the first PRS resource set;
the indicating UE how to measure a PRS resource corresponding to the PRS resource configuration information, comprises:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, wherein the second priority is lower than a first priority corresponding to the PRS resource in the first PRS resource set.

33. The location management function of claim 32, wherein the indicating the UE not to measure a PRS resource in the second PRS resource set comprises: indicating the UE to only measure a PRS resource in the first PRS resource set other than the second PRS resource set; or
the indicating the UE to measure a PRS resource in the second PRS resource set comprises: indicating the UE to only measure a PRS resource in the second PRS resource set; or
the indicating the UE to perform measurements according to the second priority corresponding to the PRS resource in the second PRS resource set, comprises:
indicating the UE to measure the PRS resource in the first PRS resource set other than the second PRS resource set and determine whether to measure the PRS resources in the second PRS resource set according to first signaling, wherein the first signaling is configured by the LMF to the UE; or
indicating the UE to measure the PRS resource in the second PRS resource set and determine whether to measure the PRS resource in the first PRS resource set other than the second PRS resource set according to first signaling, wherein the first signaling is configured by the LMF to the UE.

34. The location management function of claim 30, wherein the target device is a base station; the resource configuration information is sounding reference signal, SRS, resource configuration information, and the measurement constraint information is SRS measurement constraint information;
the SRS measurement constraint information is used for indicating the base station how to measure an SRS resource corresponding to the SRS resource configuration information.

35. The location management function of claim 34, wherein a first SRS resource set comprises SRS resources corresponding to the SRS resource configuration information, a second SRS resource set comprises SRS resources corresponding to the SRS measurement constraint information, and the second SRS resource set is a subset of the first SRS resource set;
the indicating the base station how to measure an SRS resource corresponding to the SRS resource configuration information, comprises:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, wherein the second priority is lower than a first priority corresponding to the SRS resource in the first SRS resource set.

36. The location management function of claim 35, wherein the indicating the base station not to measure an SRS resource in the second SRS resource set comprises: indicating the base station to only measure an SRS resource in the first SRS resource set other than the second SRS resource set; or
the indicating the base station to measure an SRS resource in the second SRS resource set comprises: indicating the base station to only measure an SRS resources in the second SRS resource set; or
the indicating the base station to perform measurements according to the second priority corresponding to the SRS resource in the second SRS resource set, comprises:
indicating the base station to measure the SRS resource in the first SRS resource set other than the second SRS resource set and determine whether to measure the SRS resource in the second SRS resource set according to first signaling, wherein the first signaling is configured by the LMF to the base station; or
indicating the base station to measure the SRS resource in the second SRS resource set and determine whether to measure the SRS resource in the first SRS resource set other than the second SRS resource set according to first signaling, wherein the first signaling is configured by the LMF to the base station.

37. The location management function of any one of claims 30 to 36, wherein the operations further comprise:
receiving first location information of the UE, and determining a predicted location of the LTE based on the first location information;
receiving angle information of resources corresponding to the resource configuration information, wherein the angle information comprises a horizontal dimension angle and a vertical dimension angle; and
determining the measurement constraint information based on the predicted location, location information of the base station, and the angle information.

38. The location management function of claim 37, wherein the first location information comprises angle information of an uplink signal and/or received power information of the uplink signal.

39. A measurement apparatus for positioning, comprising:
a receiving module, configured to receive resource configuration information and measurement constraint information transmitted by a location management function, LMF; where the measurement constraint information is used for indicating a target device how to measure a resource corresponding to the resource configuration information; and
a reporting module, configured to measure the resource based on the resource configuration information and the measurement constraint information, and transmit measurement results to the LMF.

40. The apparatus of claim 39, wherein the target device is a user equipment, UE; the resource configuration information is positioning reference signal, PRS, resource configuration information, and the measurement constraint information is PRS measurement constraint information;
the PRS measurement constraint information is used for indicating UE how to measure a PRS resource corresponding to the PRS resource configuration information.

41. The apparatus of claim 40, wherein a first PRS resource set comprises PRS resources corresponding to the PRS resource configuration information, a second PRS resource set comprises PRS resources corresponding to the PRS measurement constraint information, and the second PRS resource set is a subset of the first PRS resource set;
the indicating UE how to measure a PRS resource corresponding to the PRS resource configuration information, comprises:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, wherein the second priority is lower than a first priority corresponding to the PRS resource in the first PRS resource set.

42. The apparatus of claim 41, wherein the indicating the UE not to measure a PRS resource in the second PRS resource set comprises: indicating the UE to only measure a PRS resource in the first PRS resource set other than the second PRS resource set; or
the indicating the UE to measure a PRS resource in the second PRS resource set comprises: indicating the UE to only measure a PRS resource in the second PRS resource set; or
the indicating the UE to perform measurements according to the second priority corresponding to the PRS resource in the second PRS resource set, comprises:
indicating the UE to measure the PRS resource in the first PRS resource set other than the second PRS resource set and determine whether to measure the PRS resources in the second PRS resource set according to first signaling, wherein the first signaling is configured by the LMF to the UE; or
indicating the UE to measure the PRS resource in the second PRS resource set and determine whether to measure the PRS resource in the first PRS resource set other than the second PRS resource set according to first signaling, wherein the first signaling is configured by the LMF to the UE.

43. The apparatus of claim 39, wherein the target device is a base station; the resource configuration information is sounding reference signal, SRS, resource configuration information, and the measurement constraint information is SRS measurement constraint information;
the SRS measurement constraint information is used for indicating the base station how to measure an SRS resource corresponding to the SRS resource configuration information.

44. The apparatus of claim 43, wherein a first SRS resource set comprises SRS resources corresponding to the SRS resource configuration information, a second SRS resource set comprises SRS resources corresponding to the SRS measurement constraint information, and the second SRS resource set is a subset of the first SRS resource set;
the indicating the base station how to measure an SRS resource corresponding to the SRS resource configuration information, comprises:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, wherein the second priority is lower than a first priority corresponding to the SRS resource in the first SRS resource set.

45. The apparatus of claim 44, wherein the indicating the base station not to measure an SRS resource in the second SRS resource set comprises: indicating the base station to only measure an SRS resource in the first SRS resource set other than the second SRS resource set; or
the indicating the base station to only measure an SRS resource in the second SRS resource set comprises: indicating the base station to only measure an SRS resources in the second SRS resource set; or
the indicating the base station to perform measurements according to the second priority corresponding to the SRS resource in the second SRS resource set, comprises:
indicating the base station to measure the SRS resource in the first SRS resource set other than the second SRS resource set and determine whether to measure the SRS resource in the second SRS resource set according to first signaling, wherein the first signaling is configured by the LMF to the base station; or
indicating the base station to measure the SRS resource in the second SRS resource set and determine whether to measure the SRS resource in the first SRS resource set other than the second SRS resource set according to first signaling, wherein the first signaling is configured by the LMF to the base station.

46. The apparatus of any one of claims 43 to 45, wherein the reporting module is further configured to:
transmit first location information of the UE to the LMF to indicate a predicted location of the UE.

47. The apparatus of claim 46, wherein the first location information comprises angle information of an uplink signal and/or received power information of the uplink signal.

48. The apparatus of any one of claims 43 to 45, wherein the reporting module is further configured to:
transmit angle information corresponding to the SRS resource to the LMF, wherein the angle information comprises a horizontal dimension angle and a vertical dimension angle; and/or
transmit angle information corresponding to the PRS resource to the LMF, wherein the angle information comprises a horizontal dimension angle and a vertical dimension angle.

49. A measurement apparatus for positioning, comprising:
a transmitting module, configured to transmit resource configuration information and measurement constraint information to a target device; where the measurement constraint information is used for indicating the target device how to measure a resource corresponding to the resource configuration information; and
a processing module, configured to receive measurement results transmitted by the target device for positioning a user equipment, UE, wherein the measurement results are obtained through measuring, by the target device, the resource based on the resource configuration information and the measurement constraint information.

50. The apparatus of claim 49, wherein the target device is a user equipment, UE; the resource configuration information is positioning reference signal, PRS, resource configuration information, and the measurement constraint information is PRS measurement constraint information;
the PRS measurement constraint information is used for indicating UE how to measure a PRS resource corresponding to the PRS resource configuration information.

51. The apparatus of claim 50, wherein a first PRS resource set comprises PRS resources corresponding to the PRS resource configuration information, a second PRS resource set comprises PRS resources corresponding to the PRS measurement constraint information, and the second PRS resource set is a subset of the first PRS resource set;
the indicating UE how to measure a PRS resource corresponding to the PRS resource configuration information, comprises:
indicating the UE not to measure a PRS resource in the second PRS resource set, or indicating the UE to measure a PRS resource in the second PRS resource set, or indicating the UE to perform measurements according to a second priority corresponding to the PRS resource in the second PRS resource set, wherein the second priority is lower than a first priority corresponding to the PRS resource in the first PRS resource set.

52. The apparatus of claim 51, wherein the indicating the UE not to measure a PRS resource in the second PRS resource set comprises: indicating the UE to only measure a PRS resource in the first PRS resource set other than the second PRS resource set; or
the indicating the UE to measure a PRS resource in the second PRS resource set comprises: indicating the UE to only measure a PRS resource in the second PRS resource set; or
the indicating the UE to perform measurements according to the second priority corresponding to the PRS resource in the second PRS resource set, comprises:
indicating the UE to measure the PRS resource in the first PRS resource set other than the second PRS resource set and determine whether to measure the PRS resources in the second PRS resource set according to first signaling, wherein the first signaling is configured by the LMF to the UE; or
indicating the UE to measure the PRS resource in the second PRS resource set and determine whether to measure the PRS resource in the first PRS resource set other than the second PRS resource set according to first signaling, wherein the first signaling is configured by the LMF to the UE.

53. The apparatus of claim 49, wherein the target device is a base station; the resource configuration information is sounding reference signal, SRS, resource configuration information, and the measurement constraint information is SRS measurement constraint information;
the SRS measurement constraint information is used for indicating the base station how to measure an SRS resource corresponding to the SRS resource configuration information.

54. The apparatus of claim 53, wherein a first SRS resource set comprises SRS resources corresponding to the SRS resource configuration information, a second SRS resource set comprises SRS resources corresponding to the SRS measurement constraint information, and the second SRS resource set is a subset of the first SRS resource set;
the indicating the base station how to measure an SRS resource corresponding to the SRS resource configuration information, comprises:
indicating the base station not to measure an SRS resource in the second SRS resource set, or indicating the base station to measure an SRS resource in the second SRS resource set, or indicating the base station to perform measurements according to a second priority corresponding to the SRS resource in the second SRS resource set, wherein the second priority is lower than a first priority corresponding to the SRS resource in the first SRS resource set.

55. The apparatus of claim 54, wherein the indicating the base station not to measure an SRS resource in the second SRS resource set comprises: indicating the base station to only measure an SRS resource in the first SRS resource set other than the second SRS resource set; or
the indicating the base station to measure an SRS resource in the second SRS resource set comprises: indicating the base station to only measure an SRS resources in the second SRS resource set; or
the indicating the base station to perform measurements according to the second priority corresponding to the SRS resource in the second SRS resource set, comprises:
indicating the base station to measure the SRS resource in the first SRS resource set other than the second SRS resource set and determine whether to measure the SRS resource in the second SRS resource set according to first signaling, wherein the first signaling is configured by the LMF to the base station; or
indicating the base station to measure the SRS resource in the second SRS resource set and determine whether to measure the SRS resource in the first SRS resource set other than the second SRS resource set according to first signaling, wherein the first signaling is configured by the LMF to the base station.

56. The apparatus of any one of claims 49 to 55, wherein the processing module is further configured to:
receive first location information of the UE, and determine a predicted location of the UE based on the first location information;
receive angle information of resources corresponding to the resource configuration information, wherein the angle information comprises a horizontal dimension angle and a vertical dimension angle; and
determine the measurement constraint information based on the predicted location, location information of the base station, and the angle information.

57. The apparatus of claim 56, wherein the first location information comprises angle information of an uplink signal and/or received power information of the uplink signal.

58. A non-transitory computer readable storage medium storing computer programs that cause a processor to perform the measurement method for positioning of any one of claims 1 to 10 or perform the measurement method for positioning of any one of claims 11 to 19.
